# EUROPEAN PATENT APPLICATION

(11) **EP 1 710 211 A1**
(43) Date of publication of application: **11.10.2006**
(21) Application number: 06460005.9
(22) Date of filing: 16.03.2006
(51) Int. Cl.: C02F 11/14

(54) **Method of integrated processing of materials, especially wastes**

(30) Priority: 25.03.2005 PL 37393405
(71) Applicant: Multichem Eko Spolka z o.o., 74-200 Pyrzyce (PL)
(72) Inventor: Stanislaw, Rogut, 74-200 Pyrzyce (PL)
(74) Representative: Majcherczak, Elzbieta

(57) **Abstract**

The subject of the invention is the method of integrated materials processing, especially wastes, characterized by the fact that half-products heated to 20° - 90°, preferably to 60° produced during wastes treatment by ground burnt lime of high reactivity contain calcium hydrate, not processed calcium oxide, solid substances resulting from waste and water, leave the processing reactor and are sent by conveyor to the inlet of milling and drying device, preferably milling and drying grid mill in which resulting from hitting by milling parts against product crumbs, the process of milling of sticking product grains is done with simultaneous extraction of hydratation heat resulting from reaction of dew contained in the semi-product with not reacted previously reacting agent and heat of change of kinetic energy of rotating chains to heat energy by which break-up material heats up to a boiling temperature, and a stream of released steam preferably dry, takes away particles of moisture forcing intensive evaporating and consequently drying of the product.

## Description

The subject of the patent is a method of integrated processing of materials, especially wastes.

Known methods of material processing, mainly wastes like sewage sediment, biomass, biological wastes, animal slaughter wastes and animal food processing wastes and other assume sterilizing of wastes with chemical agents (strong acids or bases), physical (high temperature, high pressure, ultrasonic, microwaves) or biological (fermentation bacteria).

The most common output forms of waste materials are watery sludge and paste which are mixtures of different solids and liquids. In most cases during storing and processing they emit stinks in form gases and aerosols being very burdensome for inhabitants and environment.

Currently used methods assume processing and utilizing such wastes in multi-stage technological processes consisting of series of unit operations such as breaking up, chemical processing, thermal processing, milling, cooling in different sequence and configuration.

The basic disadvantage of these methods is that in all used separate operations only some phenomena associated with unit operations are used. For example while performing of breaking up the wastes by milling we do not use thermal energy associated with the process.

In chemical operations, the biggest stress is put on process effectiveness neglecting other aspects of the process such as heat emitted or change in product physical structure.

An example of the process, in which only certain phenomena associated with unit operations are used, is sewage wastes sanitation with grinded burnt lime in which practically only chemical sterilization abilities are used.

Another example of similar approach to solution of described problems are for example technologies for drying of sewage wastes with heat energy emitted during the milling process. The milling devices such as chain, bowl and ball mills solve the problem of grinding and drying but with very high energy consumption. Such solutions, attractive for potential customers are seldom used because of necessity to invest previously in very expensive energy supply systems not mention its huge unit consumption.

Solutions with an invention, which use simultaneously several physical and chemical processes going in applied unit operations through application of integrated transforming processes are given in examples of use.

### Example 1:

Humid hot semi-product at 60°C produced during treatment of thickened warmed sewage wastes with burnt lime of high reactivity containing 20% of lime hydrate, 5% not processed calcium oxide, 20% solid matters coming from sewage sludge and up to 50% of water go out from processing reactor and is transported with a conveyor to an inlet of ball, bar or chain milling-drying mill, in which as a result of hitting by milling parts, the milling of damp and sticking grains of product is done. Heat arising as a result of continuing hydratation reaction of non-processed burnt lime together with the heat emitted resulted from kinetic energy change of turning chains, heats the material to the boiling temperature forcing intensive evaporation of damp contained in the processed material. In solution according to the invention, the thermal effects associated with mechanical breaking up of material intensify the running chemical process and simultaneously the change of physical structure of the product as a result of running chemical reaction intensifies the breaking up and heat emitting process. Thanks to this solution, unexpected result of the invented method is that thermal energy produced during breaking up and milling of wastes and chemical energy of reaction are emitted simultaneously inside processed mixture which causes that most of thermal energy generated is used for drying, sterilizing and grinding of the arising product.

### Example 2:

The process is executed as in Example 1 with a difference, that the operation of preparing of the material for milling and drying is executed in a process generator constituting an integral part of a milling system.

### Example 3:

The process is executed according to Example 1 or 2 with a difference, that operations of material's contact with reacting agent, its milling and drying are run in one device executing all previously mentioned unit operations: mixing of material with reactive agent, heating of mixture with heat arising from on-going chemical reaction, simultaneous evaporating of damp contained in material with the heat of chemical reaction and heat generated by transforming mechanical energy of milling parts to thermal energy.

### Example 4:

The process is executed according to Example 1, 2 or 3 with a difference, that the reactive substance used in the process is in form of pieces, which crushed, milled and contact with wastes, reactions with wastes and drying and sterilizing of resulted product are done in integrated process reactor.

### Example 5:

The process is executed according to previous examples but materials being dried, milled and sterilized are all kinds of materials, specially communal wastes, animal slaughter and animal food processing wastes, petroleum wastes, biomass, damp materials as chalk, fertilizing lime and other of substantial dampness.

### Example 6:

The process is executed according to Exampless 1,2,3,4 and 5 with a difference that as a reactive substance are used all chemical substances able to emit hydratation heat such as burnt dolomite, anhydride calcium chloride, singular anhydride or in mixtures both in pieces as ground.

### Example 7:

The process is executed according to previously given examples with a difference that heat from condensing of gases emitted from the device is used to warm the processed materials.

## Claims

1. The method of integrated material processing, specially wastes, **characterized by** the fact, that products warmed to 20° to 90°C, preferably to 60°C, produced during waste treatment, preferably sewage sludge treated with burnt lime of high reactivity containing 5% to 50%, preferably 20% of weight of lime hydrate, 2% to 20%, preferably 5% not processed calcium oxide, and 5% to 60%, preferably 20% solid matters coming from sewage sludge and up to 5% to 90%, preferably 50% of water go out from processing reactor and is transported with a conveyor to an inlet of ball, bar or chain milling-drying mill, in which as a result of hitting by milling parts, the milling of damp and sticking grains of product is done with heat arising as a result of continuing hydratation reaction of non-processed burnt lime together with the heat emitted resulted from reaction of water contained in semi-product with not processed reactive substance kinetic energy change of turning chains, heats the material to the boiling temperature forcing intensive evaporation of damp contained in the processed material and the stream of dry steam takes particles of water forcing of intensive evaporation and drying of the product.

2. The method of integrated processing of materials, specially wastes according to Claim 1 **characterized by** the fact that the operations of initial preparing of the material specially waste for milling and drying processes are executed in a process generator constituting an integral part of a milling-drying system.

3. The method of integrated processing of materials, specially wastes according to Claim 1 and/or 2 **characterized by** the fact that operations of material's contact with reacting agent, its milling and drying are run in one device executing all previously mentioned unit operations: mixing of material with reactive agent, heating of mixture with heat arising from on-going chemical reaction, evaporating of damp contained in material with the heat of chemical reaction and heat generated by transforming mechanical energy of milling parts to thermal energy.

4. The method of integrated processing of materials, specially wastes according to Claim 1, 2 or 3 **characterized by** the fact that the reactive substance used in the process is in form of pieces, which crushed, milled and contact with wastes, reactions with wastes and drying and sterilizing of resulted product are done in integrated process reactor.

5. The method of integrated processing of materials, specially wastes according to Claim 1, 2, 3, or 4 **characterized by** the fact, that materials being dried, milled and sterilized are all kinds of materials, specially communal wastes, animal slaughter and animal food processing wastes, petroleum wastes, biomass, damp materials as chalk, fertilizing lime and other of substantial dampness.

6. The process is executed according to Claim 1,2,3, and 4 with a difference that as a reactive substance are used all chemical substances able to exothermic reaction with components of processing material by hydratation preferably burnt lime, burnt dolomite, anhydride calcium chloride, singular anhydride as well as in mixtures.

7. The method of integrated processing of materials, specially wastes according to Claim 1, 2, 3 and 4 **characterized by** the fact that heat from condensing of gases emitted from the device is used to warm the processed materials.
